# EUROPEAN PATENT APPLICATION

(11) **EP 2 073 527 A1**
(43) Date of publication of application: **24.06.2009**
(21) Application number: 07124037.8
(22) Date of filing: 21.12.2007
(51) Int. Cl.: H04N 1/00, H04N 1/32

(54) **Process of facilitating remote printed delivery of electronic files**

(71) Applicant: Lato, Michael J., Los Angeles CA 90019 (US)
(72) Inventor: Lato, Michael J., Los Angeles CA 90019 (US)
(74) Representative: Provvisionato, Paolo

(57) **Abstract**

Methods of providing printed documents originating as electronic documents comprise electronically transmitting from senders to a service company electronic versions of documents, producing by the service company printed versions of the electronically transmitted documents, and physically delivering the printed documents to identified recipients. Documents may include digital photographs, and the digital photographs may be printed to produce postcards that may be physically mailed to the intended recipients. The service company may include multiple sites disposed at locations remote from one another. In such case, the location of the service company that produces the printed documents may be chosen based on various criteria, including proximity to the intended recipient, delivery costs involved and other criteria. Other features include physically providing recipients with storage medium that include copies of the electronic documents, providing copies of the same document to multiple recipients, and providing postcards with multiple photographs thereon.

## Description

### Field of the Invention

The present invention relates to a process of facilitating remote printed delivery of electronic files and, more particularly, to remote printed delivery of electronic documents, which include photographic and non-photographic documentation, originating from electronic sources. The present invention further entails delivery of printed postcards containing photographs taken by and electronically transferred from electronic sources including camera-phones and other e-mail capable camera technology.

### Background of the Invention

Presently, documents can be delivered from one location - the originating source - to another location - the destination - in various manners. Such manners include mail delivery (e.g., the U.S. postal service, Federal Express, etc.) and other forms of courier services. Documents can also be sent via facsimile. Recently, the use of e-mail has become tremendously popular, where the document to be transmitted may be included in the body of the e-mail or as an attachment thereto. While the above manners of document delivery generally work reasonably well most of the time, each has limitations and shortcomings. For example, mail services can be very costly, particularly for large documents (e.g., a 1,000 page document) or where international mail delivery is involved, and very slow. Delivery via facsimile is ill-suited for the transmission of large documents, due to relatively slow transmission rates and potentially large telephone usage charges. Also, most currently available facsimile machines are unable to transmit color documents, as well as high-resolution documents (e.g., photographs). E-mail, on the other hand, while capable of transmitting large documents very quickly and inexpensively to both local and distant destinations, may be unsuitable if the recipient does not have e-mail capability or has limited e-mail capability, where file size and other restrictions may exist.

Moreover, photographs, a type of document, may be delivered in various manners, as described above, but each delivery manner likewise has shortcomings. In particular, mail delivery of photographs may be both expensive and slow. Photographs do not transmit well via facsimile. As for e-mail, it has become commonplace for individuals to send digital photographs to friends and family, and many websites enable users to share their digital pictures in various manners. But those digital photographs, whether sent by e-mail, a web-site notice or other electronic means, rarely are printed by the recipients. Rather, the photographs digitally received often are quickly reviewed and just as quickly deleted. Still further, for those recipients who either do not have e-mail capability or are technically inept, they are not even offered the opportunity to view digitally sent photographs. As a result, photographs sent electronically often are unappreciated.

Interestingly, it has been a decades-long tradition for individuals to mail postcards, often sent with customized messages, to friends and relatives while on vacation. The postcard recipients usually appreciate the sentiment and often save the postcards in a collection. Years later, these postcard collections often are cherished. But due to the recent explosion of sending friends and relatives photographs in some electronic fashion, as mentioned above, it is now far less common for individuals to send postcards.

### Objects and Summary of the Invention

In view of the foregoing, it is an object of the present invention to provide various processes for sending documents in novel manners that overcome the above-mentioned shortcomings of existing manners of document delivery.

It is a further object of the present invention to provide various processes for sending photographs in various advantageous, novel manners.

To achieve the foregoing and other objects in accordance with the present invention, a method of providing a printed document in accordance with the present invention comprises the steps of electronically transmitting by a sender to a service company an electronic version of a document, producing by the service company a printed version of the document transmitted by the sender, and arranging for physical delivery of the printed version of the document to a recipient, where the location of the recipient is different from the location of the sender.

As an aspect of the invention, the identity of the recipient is transmitted with the electronic version of the document.

As another aspect of the invention, the method further comprises transmitting by a sender to a service company identification of a plurality of recipients, and the producing step is carried out by producing a plurality of printed versions of the document, and the arranging step is carried out by arranging for delivery of each of the plurality of printed versions of the document to a respective one of the identified recipients.

As a further aspect of the invention, the method further comprises designating one of a plurality of remote sites of the service company to produce the printed version of the document, with each of the remote sites being physically disposed at a location remote from locations of the other remote sites, and the producing step is carried out by the designated one of the remote sites.

As a feature of this aspect, the designating step is carried out by designating one of the remote sites based on distances of the remote sites to the location of the recipient.

As another feature of this aspect, the designating step is carried out by designating one of the remote sites based on a lowest cost of physical delivery of the printed version of the document to the recipient from each of the remote sites. As a further feature of this aspect, the designating step is carried out by designating one of the remote sites based on an earliest time of physical delivery of the printed version of the document to the recipient from each of the remote sites.

As another aspect of the invention, the method further comprises providing on a physical medium a copy of the electronic version of the document transmitted by the sender, and the arranging step includes arranging for physical delivery of the physical medium to the recipient.

As a feature of this aspect, the arranging step is carried out by arranging for the physical delivery to the recipient of the printed version of the document together with the physical medium containing a copy of the electronic version of the document.

As a further aspect of the invention, the method further comprises the step of taking a digital photograph to produce the electronic version of the document.

As a feature of this aspect, the step of producing is carried out by producing a printed version of the document on a postcard, and the arranging step is carried out by arranging for physical delivery of the postcard to the recipient.

In accordance with another embodiment of the invention, a method of producing and delivering a customized postcard comprises the steps of electronically receiving by a service company from a sender an electronic version of a photograph, producing a postcard having the photograph printed thereon, and arranging for physical delivery of the postcard to a recipient, where the location of the recipient is different from the location of the sender.

As an aspect of the invention, the identity of the recipient is transmitted with the electronic version of the photograph.

As another aspect of the invention, the method further comprises the step of receiving by the service company an identity of the recipient after receiving the electronic version of the photograph, and physical delivery of the postcard is carried out after receiving the identity of the recipient.

As a further aspect of the invention, the step of arranging for physical delivery of the postcard includes providing a stamp and an address of the recipient on the postcard, and supplying the postcard to a postal service, where the postcard is not included in a mailing envelope.

As an additional aspect of the invention, the method further comprises electronically receiving by the service company from the sender identification of a plurality of recipients, and the producing step is carried out by producing a plurality of postcards having the photograph printed thereon, and the arranging step is carried out by arranging for physical delivery of the postcards to each of the identified recipients.

As yet another aspect of the invention, the step of electronically receiving includes electronically receiving electronic versions of a plurality of different photographs and electronically receiving identification of a plurality of recipients, the producing step includes producing, for each of the plurality of different photographs, a postcard having the respectively different photograph printed thereon, and the arranging step is carried out by arranging for physical delivery of each produced postcard to a respectively different one of the identified recipients.

As yet a further aspect of the invention, the method further comprises designating one of a plurality of remote sites of the service company to produce the postcard, each of the remote sites being physically disposed at a location remote from locations of the other remote sites, and the producing step is carried out by the designated remote site.

As a feature of this aspect, the designating step is carried out by designating a remote site based on proximity to the location of the recipient.

As another aspect of the invention, the method further comprises providing by the service company a copy of the received electronic version of the photograph on a physical medium, and the arranging step includes arranging for physical delivery of the physical medium to the recipient.

As a feature of this aspect, the method further comprises adhering the physical medium to the postcard, and the arranging step is carried out by arranging for physical delivery to the recipient via a postal service of the postcard with the physical medium adhered thereto, the postcard with the physical medium adhered thereto not being included in a mailing envelope.

As a further aspect of the invention, the step of electronically receiving includes electronically receiving electronic versions of a plurality of different photographs, and the producing step is carried out by producing the postcard having at least one of the photographs printed thereon, the method further comprising the step of providing by the service company copies of the received electronic versions of the plurality of photographs on a physical medium, the physical medium including at least copies of electronic versions of photographs not printed on the postcard, and the arranging step includes arranging for physical delivery of the physical medium to the recipient.

As another aspect of the invention, the step of electronically receiving includes electronically receiving electronic versions of a plurality of different photographs, and the producing step is carried out by producing the postcard having all of the photographs printed thereon.

As an additional aspect of the invention, the method further comprises the steps of taking by the sender a photograph using an electronic device to produce the electronic version of the photograph, and sending the electronic version of the photograph to the service company.

As a feature of this aspect, the step of sending the electronic version of the photograph to the service company is carried out by the sender using the electronic device used to take the photograph.

As a further aspect of the invention, the electronically receiving step includes receiving a personalized message with the electronic version of the photograph, and the producing step includes providing the personalized message on the postcard.

As another aspect of the invention, the method further comprises supplying from the sender to the service company information designating whether or not the sender designates that an advertisement is to be placed on the postcard, and the producing step includes placing an advertisement on the postcard if the information supplied from the sender designates that an advertisement is to be placed on the postcard.

As a feature of this aspect, the method further comprises the service company charging the sender an amount of money for production and delivery of the postcard, the amount of money being a function of at least whether or not the sender designates that an advertisement is to be placed on the postcard.

Various other objects, advantages and features of the present invention are described below and additional objects, advantages and features of the present invention will become readily apparent to those of ordinary skill in the art.

### Brief Description of the Drawings

The following detailed description, given by way of example and not intended to limit the present invention solely thereto, will best be appreciated in conjunction with the accompanying drawings, wherein like reference numerals denote like elements and parts, in which:
Figure 1 is a block diagram of various entities involved in the processes of the present invention;
Figure 2 is a flow chart showing the general process of the present invention;
Figure 3 is a block diagram in accordance with another embodiment of the present invention, showing a service company having multiple remote sites;
Figure 4 is a block diagram in accordance with a further embodiment of the present invention, involving the physical delivery of a printed document and a storage medium including a copy of an electronic form of the document;
Figure 5 is a block diagram in accordance with yet another embodiment of the present invention, involving the production of a postcard having a photograph printed thereon; and
Figure 6 is a flow chart of the process of the present invention in accordance with the embodiment illustrated in Figure 5.

### Detailed Description of the Present Invention

The present invention combines modern technology (e.g. e-mail) with traditional techniques (e.g. regular mail delivery) to provide certain novel processes for the delivery of documents.

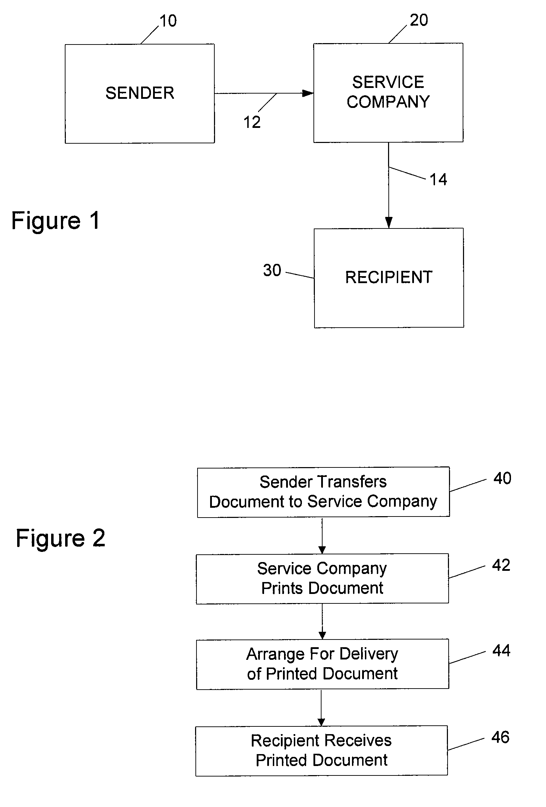

Referring now to the drawings, Figure 1 is a block diagram useful for understanding the general process of the present invention, and Figure 2 is a flow chart showing the general process of the present invention. Referring both to Figures 1 and 2, initially, and in accordance with the present invention, a sender 10 sends a document 12 to a service company 20 (step 40 in Figure 2). Sender 10 may be an individual, a group of individuals, a workplace, a government facility or other originator of document 12. Document 12 is a document provided in electronic form. Document 12 may be a word processing document, a table, a report, a photograph, etc. As used herein, "electronic form," "electronic representation," "electronic document" or other similar term refers to a non-print representation of the document. For example, the electronic form of the document may be data within the body of an e-mail, a computer file attached to an e-mail, a computer file uploaded to a website, etc. The electronic form of a document may also be a facsimile transmission (e.g., the signals transmitted from one facsimile machine to another facsimile machine).

After receiving document 12, service company 20 converts document 12 to printed form, as set forth in step 42 in Figure 2. Often, document 12 is printed on paper by a standard printer utilizing an appropriate software program. If document 12 is sent via facsimile, the receiving facsimile machine prints the received document automatically or the received transmission may be converted to paper form in any other manner.

The printed document (document 14 shown in Figure 1) is physically delivered from service company 20 to a recipient 30. In particular, and as shown in Figure 2, the service company arranges for physical delivery of printed document 14, as shown in step 44, and the intended recipient 30 receives the printed document 14, as shown in step 46. Physical delivery of printed document 14 may be via a governmental postal service (e.g., the U.S. Postal Service), a private company (Federal Express, United Parcel Service, etc.), courier or other manner.

In the above-described process, as well as in certain processes described below, a sender arranges for the delivery of any type of document in electronic form to a recipient in a quick and efficient manner, as well as an environmentally-friendly manner, via the use of electronic means, such as by e-mail, and via the use of a service company that facilitates the processes described herein. The service company, in turn, converts the electronic form of the document to printed form and arranges for actual, physical delivery of the printed form of the document to the intended recipient so that the recipient receives an actual, printed document. Thus, the recipient need not have e-mail or other electronic receipt capability in order to receive the document, even though the document originally was sent electronically by the original sender. Further, and optionally, the recipient need not know that the document originally was sent in electronic form to the service company.

Other advantages are realized by the herein-described processes. Service company 20 may be located in relatively close proximity to the recipient and, thus, the cost to physically deliver the printed document from the service company to the recipient would likely be substantially less than the cost to physically deliver a printed document from the original sender to the recipient. This beneficial feature and others are further illustrated in the variations of the present invention discussed below.

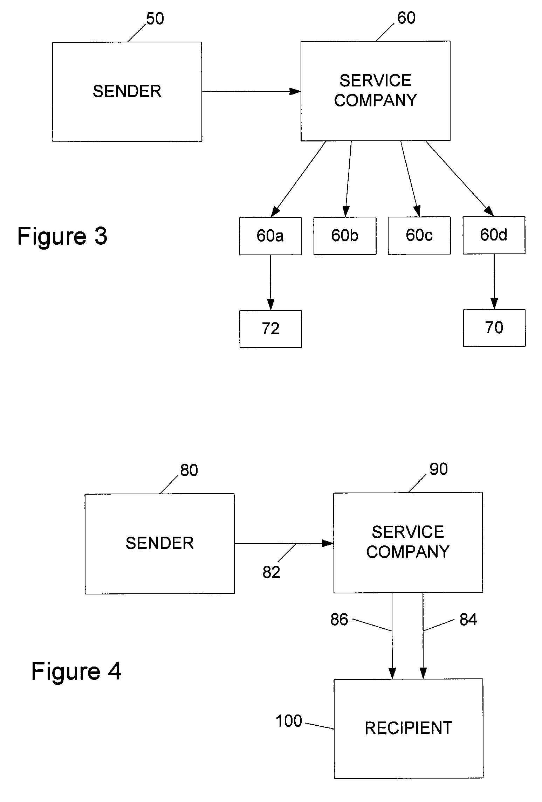

In particular, in one variation of the present invention (and, optionally, in other variations described herein), the service company has multiple locations or utilizes multiple agents (related or unrelated entities) physically located at different locations. Referring to Figure 3 of the drawings, a sender 50 delivers in an electronic manner an electronic document to a service company 60 that has multiple locations. In particular, service company 60 has multiple sites 60a, 60b, 60c and 60d that are physically disposed apart from one another. It is appreciated that while the example shown in Figure 3 and described herein sets forth four remote sites, any other number of multiple sites may be employed.

For convenience, sites 60a through 60d are referred to herein as remote sites, indicating that each site is physically remote (by at least some distance) from one another. For example, remote site 60a may be disposed in New York City, remote site 60b may be disposed in Los Angeles, remote site 60c may be disposed in London, and remote site 60d may be disposed in Tokyo. Of course, remote sites may exist in other cities around the world, as well as in towns, villages, rural locations, and so on. Moreover, remote sites may be disposed relatively close to one another, should the need arise, such as by providing one site in downtown

New York City, a second site in midtown New York City, etc. In any event, each remote site is located at a different physical location (e.g., not in the same office building).

In accordance with the present invention, service company 60, after receiving the electronic document from sender 50 (e.g., via e-mail), transmits the received electronic document (or arranges for the transmission) to one of the remote sites based upon one or more criteria. One criteria is cost, whereupon the electronic document is routed to the remote site which results in the lowest cost to sender 50 and/or to service company 60. Generally, since there is no distinguishable cost difference between electronically transmitting a document to different locations (at least currently), the remote site is selected based upon the cost to physically deliver the printed document from that remote site to the intended recipient, for example, recipient 70 shown in Figure 3. For example, if the intended recipient 70 is disposed in Tokyo, then it is likely that it is the least expensive to arrange for remote site 60d, which is located in Tokyo in the example provided, to print the document and to arrange for physical delivery of that document to recipient 70, also located in Tokyo. As another example, if the intended recipient is located in New York City, such as represented by recipient 72 in Figure 3, then remote site 60a, also located in New York City in the example provided, is selected and prints the document and arranges for physical delivery of the document to recipient 72. Time is another criteria that may be used. That is, if speed of delivery is critical, then a remote site is selected based upon estimated delivery times from each of the remote sites to the recipient. Ordinarily, the remote site closest to the recipient will be chosen, but not always. Speed of delivery often is affected by pick-up schedules (e.g., by delivery services), local laws, street congestion, blocked roads and other factors. Speed also may be affected by the size and/or weight of the package.

Multiple criterias can be employed, such as a combination of time and cost. In any event, the criteria or criterias employed may be selected by either the sender or the service company.

In another variation of the present invention, a document is arranged to be delivered to multiple recipients. Still referring to Figure 3, sender 50 electronically delivers a document to service company 60 with instructions to deliver the document to multiple recipients, for example, recipients 70 and 72. Service company can arrange to print the document twice at the same physical location and then to arrange for physical delivery of each of those documents to the intended recipients. However, in a preferred version, the electronic file supplied by sender 50 is routed to multiple remote sites, such as remote sites 60a and 60d in the example shown in Figure 3. Accordingly, remote site 60d produces a single printed version of the electronic document and arranges for its physical delivery to recipient 70. Similarly, remote site 60a produces a single printed version of the electronic document and arranges for its physical delivery to recipient 72. Based on instructions supplied by sender 60, any number of printed documents may be produced by service company 60 and delivered to any number of recipients, in accordance with the present invention.

In each of the variations described herein, including those described above as well as additional variations described hereinafter, a copy of the electronic version of the document that is supplied by the sender also may be supplied to the recipient. Referring to Figure 4, a sender 80 electronically transmits a document 82 to a service company 90, which in turn arranges for electronic document 82 to be provided in printed form, such as previously described. In addition, service company 90 arranges for a copy of electronic document 82 to be stored on a suitable storage medium, such as a CD-ROM, a SIM card, a memory card (e.g., a multimedia card, a mini SD card, a memory stick, etc.) or other storage device. Service company 90 then arranges for the delivery of both the printed document (84 in Figure 4) and the storage medium (86 in Figure 4), which contains the electronic document, to the intended recipient 100. Printed document 84 and storage medium 86 may be delivered together in a single package or in multiple packages, or may be delivered separately using one or more types of delivery manners. In any event, the recipient obtains both the printed version of the document and the electronic file, both without the need for the recipient to utilize electronic means to receive the document both in printed and electronic form.

In a variation, service company 90 only arranges for the physical delivery of the storage medium (e.g., storage medium 86 in Figure 4), which contains a copy of the electronic form of the document, to recipient 100. In such case, service company 90 does not need to produce a printed version of the document.

As described herein, the "document" supplied from the sender to the service company in the multiple variations of the present invention may be a word processing document, a table, a report, a photograph, including a photo greeting card, or something else that can take printed form. In the case of when the document is a photograph, the present invention entails certain additional novel processes and variations, as described herein.

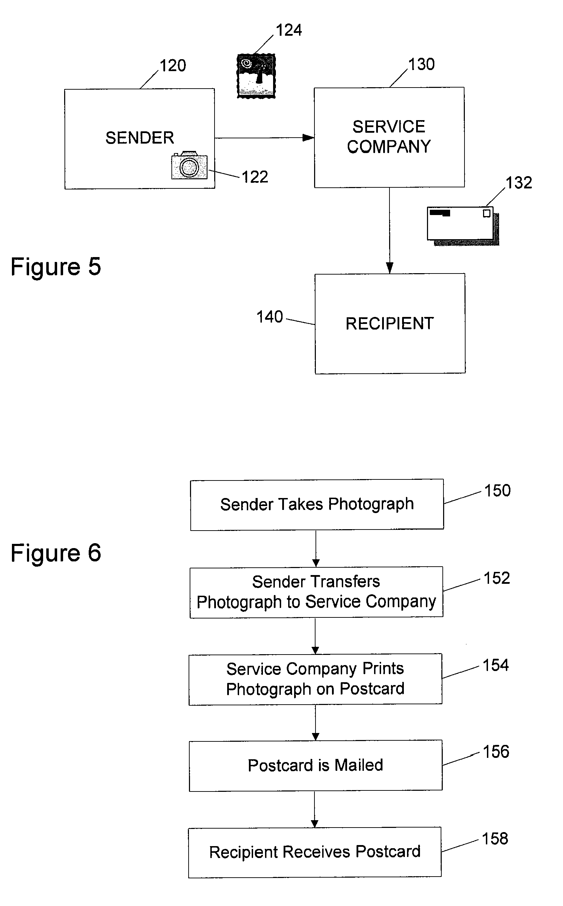

Figure 5 is a schematic block diagram and Figure 6 is a flow chart that are collectively used to describe an embodiment of the present invention that entails the electronic transmission of a photograph. Referring both to Figures 5 and 6, a sender 120 initially takes a photograph with an electronic device 122 that is capable of taking digital photographs (step 150 in Figure 6). For example, device 122 may be a digital camera, a cell phone with a built-in digital camera or other device that can take and store one or more digital pictures (for convenience, the terms "picture" and "photograph" are used interchangeably herein). Then, as shown in step 152 in Figure 6, sender 120 electronically transfers the digital photograph to a service company 130 (digital photograph shown as 124 in Figure 5).

In a preferred version of the present invention, device 122 is capable of wireless electronic transmission (e.g., e-mail capable), such as a cell phone with a built-in camera, wherein both steps 150 and 152 may be carried out by a single electronic device.

Service company 130 prints the electronically sent digital photograph. In a particular version of the present invention, service company 130 prints the photograph on a postcard, as shown in step 154 in Figure 6 (postcard shown (with a stamp) as 132 in Figure 5) (this version called, for convenience, "postcard embodiment" of the present invention). Next, service company 130 arranges for the delivery of postcard 132, as shown as step 156. In one version of the present invention, service company 130 places a stamp on the postcard (generally on the opposite side as the printed picture) along with the recipient's address and mails the postcard (e.g., with the U.S. postal service) in the usual manner. That is, the postcard is mailed without an envelope. Finally, the recipient 140 receives the delivered postcard, as shown in step 158.

The postcard embodiment of the present invention may be employed by an individual including a vacationer seeking to send a postcard to a friend or relative (or other individual or entity). Such a vacationer (or other person) may use his/her camera-phone to take digital pictures while on vacation or while taking part in other activities, such as a birthday party or other experience, or doing something else altogether. Beneficially, the postcard embodiment of the present invention enables individuals to easily arrange for the physical delivery of printed photographs (in postcard form) to any other individual. From the picture taker's perspective, only two steps are required: (1) take the digital picture; and (2) forward it, generally by e-mail, to the service company. Thus, the postcard embodiment, as well as certain other versions of the invention described herein, encourages distribution of photographs and other types of documents to recipients due to ease of use. From the perspective of the recipient, a physical, printed postcard (or picture not printed in postcard form) is received from the sender, which will most likely be appreciated far more than an e-mail or website containing a digital image.

In each of the various embodiments and variations thereof discussed herein, additional features may be employed/utilized to facilitate additional benefits and advantages in accordance with the present invention. In particular, the sender of the electronic document preferably has an account with the service company, so that billing and other information is provided to the service company during a registration process. As a feature, recipient identification information, including physical location or post-office address information, is provided to the service company during registration or at another time prior to the sender's electronic transmission of a document to the service company for subsequent physical delivery to an intended recipient or recipients.

In a variation, recipient identification information is transmitted by the sender to the service company simultaneously with the transmission of the electronic document. For example, the identity (including mailing address information) of the intended recipient is identified in the body of an e-mail sent to the service company by the sender, with the electronic document provided as an attachment to that e-mail. In yet another variation, the identity of the recipient is provided to the service company after the electronic document is supplied to the service company. In such case, the service company holds the electronic document until receiving the identity of the intended recipient, at which point, the document is provided in printed form and then delivered to the identified recipient. The document may be printed prior to receiving the identity of the recipient to expedite delivery, if desired.

As another feature, the sender may identify one or more recipients with a code, nickname or other term (also referred to herein, for convenience, as "recipient code"). During registration or at another time, the sender designates one or more potential recipients, along with mailing address information, with a respective term. For example, one recipient may be identified simply as "John," another recipient identified as "Joe," and so on, with the full name and mailing address information pre-supplied to the service company. Then, in the postcard embodiment described herein, for example, the sender may initiate the process of the present invention by electronically transmitting a digital photograph to the service company, such as by e-mail, and include the term "John" in the subject line or body of the e-mail so as to instruct the service company to print out the digital photograph, on a postcard in the postcard version, and then to deliver that postcard to the person/address that corresponds to the term "John." If a postcard (or other printed form of the document transmitted) is to be delivered to multiple recipients, then the sender identifies all of the intended recipients in the electronic transmission.

In another variation, a "group" of recipients is identified by the sender, such as "all friends," where the names and addresses of friends designed by the sender are associated with the term "all friends" (e.g., during registration). Then, to request that the service company print out a sufficient numbers of copies of physical documents, postcards, etc., to be delivered to all individuals (or other entities) associated with the term "all friends," the sender only needs to include the term "all friends" within the electronic transmission that also includes the electronic document (e.g., digital photograph).

As a further feature, a sender may transmit the electronic document to the service company with the instruction to send a printed copy (or copies) of that document to a not yet designated person or other term. For example, a sender can e-mail a document to the service company and identify "potential clients" (e.g., in the body of the e-mail) as the intended recipients. At a later time, the sender communicates to the service company (e.g., via a website, by telephone, etc.) the names and addresses of the individuals who are members of the "potential clients" group. Thereafter, the service company prints the document multiple times (or pre-prints the documents) and mails a copy to each of individuals that are now associated with the term "potential clients." Similarly, as another example, a vacationer can transmit a digital photograph from his/her camera phone to the service company and designate the recipient as "friends." The service company prints out and mails postcards to each person within the group "friends" after those individuals, as well as their addresses, are identified. As discussed herein, the group can be identified before, during or after an electronic transmission is sent to the service company. In the vacationer example discussed herein, the vacationer may send a postcard to "friends" during the day and then later that night, e.g., when the vacationer returns to his/her hotel room, communicates to the service company (e.g., via a website, by telephone, etc.) the names and addresses of the individuals who are members of the "friends" group. Thereafter, the service company prints the postcards and mails the postcards to the identified individuals.

The present invention may be employed to facilitate the mailing of multiple postcards, each having a different digital photograph printed thereon. In particular, in the vacationer example provided herein, the vacationer may opt to transfer, for example, three digital photographs to the service company with instructions to send one of the digital photographs to a first identified recipient, a second of the digital photographs to a second identified recipient, and the third digital photograph to a third identified recipient. The three recipients can be identified during registration (or later), be identified in the e-mail to the service company containing the three digital photographs, or in another manner. For example, during registration, the sender can identify various potential recipients along with their addresses. Each recipient preferably, although not necessarily, is assigned an identification number or name, such as R1 (i.e., recipient 1), R2, etc., "John," "Mary," "Mom," "Dad," etc. Then, during transfer of the digital photographs from the camera phone to the service company, the sender conveniently may provide the identification number/name of the intended recipient(s) in the e-mail (e.g., in the subject line or in the body of the e-mail) to which a digital photograph(s) is attached.

As another feature, and with respect to the postcard embodiment described herein, the sender can designate that multiple photographs be included on the same postcard to be printed and mailed to the designated recipient(s). The photographs can be printed side-by-side or in other orientations. Additional numbers of pictures can be provided on a single postcard, all as designated by the sender during registration or as an appropriate instruction in the same communication that transmits the photographs.

As a further feature of the postcard embodiment, the sender may include a personalized message or select one or more messages from a library of messages to be printed on the postcard. The sender may also designate the font (e.g., script, Arial, etc.) of the personalized message, along with other characteristics (e.g., size, color, location, etc.). As one particular option, the selected font imitates the sender's handwriting to further personalize the appearance of the message.

The personalized message and/or the format (font, size, etc.) of that message may be designated along with the transmission of the digital photograph(s) or, optionally, during registration. As various examples, the message can be traditional, such as "Wish you were here," or other similar sentiment printed on the backside (non-picture side) of the postcard. As an optional feature, the message can be superimposed over the photograph. Exemplary messages may include "Greetings from ...." and the like. As another variation, the sender selects a preselected tag line and/or public service announcement to be printed on the postcard. The look and feel of the messages preferably are controlled by the sender.

As mentioned above, a copy of the electronic document, which may be a digital photograph, may be stored by the service company on a suitable storage medium and subsequently physically supplied to a designated recipient or recipients. In the postcard embodiment, another variation includes adhering the storage medium, which preferably is a suitably small/thin memory device, to the postcard itself. In such case, the recipient of the postcard is able to enjoy both the postcard, with the photograph printed thereon, and a digital file of the photograph as stored on the attached storage medium. In yet another variation, the sender electronically transmits to the service company multiple photographs and designates one or more photographs to be included on a single postcard, where all of the transmitted photographs are stored on a storage medium, which then accompanies the postcard during delivery to the designated recipient or recipients. In such case, the recipient is able to enjoy the postcard with a photograph (or photographs) printed thereon along with digital versions of multiple photographs supplied by the sender. In addition to or instead of digital versions of photographs, the storage medium (accompanying the postcard or other documents) may contain electronic versions of other types of printed matter, such as documents, and/or non-printed matter, including audio files, motion video files and other electronic files that can be stored on a storage medium.

The present invention entails various additional features and variations. As one potential feature, the sender selects, either during registration or with each request to the service company, or at another time, a characteristic of the document or postcard to be physically delivered to the designated recipient. One characteristic is the size of the document and/or postcard. If, for example, two different-sized postcards are available (e.g., standard, large), the sender can identify which size postcard to send. Another characteristic or option available may be the quality or type of postcard, such as laminated or not laminated, etc. Different costs may be incurred by the sender depending on the options selected, number of cards sent, and other factors. Since charging users of services is well known, further description regarding costs is not provided herein, except as otherwise discussed. Another feature entails the sender identifying the date and time at which the service company is to deliver the physical document (or postcard), if not immediately.

As another feature, senders may opt to allow the service company to include one or more advertisements on the printed documents (or postcards). The advertisements may be selected by either the sender or the service company, and the cost to the sender may be a function of whether an advertisement is included, as well as the type of advertisement and/or number of advertisements that are included in the printed documents. Advertisements of third parties or of the service company itself may be included, and be utilized as a cost savings measure for the sender, the service company, or both.

As described above, the present invention entails, in certain embodiments and variations, the sender providing a digital photograph to the service company using a camera phone for further processing. Digital photographs may be sent to the service company in other manners. For example, a sender may transmit photographs and other documents to the service from a personal computer, a kiosk, a PDA, or other electronic device. As a particular example, an individual takes photographs using one's digital camera and transfers those photographs to a computer for editing or other purpose and, thereafter, transmits the edited photographs to the service company for subsequent printing and delivery to designated recipients, in accordance with the present invention.

As described herein, the present invention advantageously enables senders to transmit electronic documents in an easy, efficient and environmentally-friendly manner, for subsequent delivery of printed versions of that document. Recipients in turn receive the printed documents without the need to be concerned with electronic files. Similarly, in the postcard embodiment as described herein, a sender is able to easily transmit a digital photograph to be provided, in postcard form, to a designated recipient. The recipient receives the printed postcard, with the digital photograph printed thereon. For friends and relatives, the printed postcard will be greatly appreciated and possibly saved in a collection.

The present invention has been described in the context of a number of embodiments and variations thereof. Each of these embodiments and variations provide various features and benefits to both the sender and the recipient. It is, however, appreciated that other expedients known to those skilled in the art may be employed without departing from the spirit of the invention. Therefore, it is intended that the appended claims be interpreted as including the embodiments described herein, the alternatives mentioned above, and all equivalents thereto.

## Claims

1. A method of providing a printed document, comprising the steps of:
electronically transmitting by a sender to a service company an electronic version of a document;
producing by the service company a printed version of the document transmitted by the sender; and
arranging for physical delivery of the printed version of the document to a recipient, a location of the recipient being different from a location of the sender.

2. The method of claim 1, comprising transmitting by the sender to the service company an identification of one or more recipients; and wherein the producing step is carried out by producing one or more printed versions of the document corresponding to the one or more recipients; and the arranging step is carried out by arranging for delivery of each of one or more printed versions of the document to each respective one of the one or more identified recipients.

3. The method of claim 1, further comprising designating one of a plurality of remote sites of the service company to produce the printed version of the document, each of the remote sites being physically disposed at a location remote from locations of the other remote sites; and wherein the producing step is carried out by the designated one of the remote sites, based on a criteria selected in the croup consisting of: least distances of the remote sites to the location of the recipient, lowest cost of physical delivery to the recipient of the printed version of the document from each of the remote sites, earliest time of physical delivery to the recipient of the printed version of the document from each of the remote sites.

4. The method of claim 1, further comprising providing on a physical medium a copy of the electronic version of the document transmitted by the sender; and wherein the arranging step includes arranging for physical delivery of the physical medium to the recipient with or without the printed version of the document.

5. The method of claim 1, wherein the electronic version of the document comprises a reproduction of a digital photograph to produce a postcard having the photograph printed thereon.

6. The method of claim 5, wherein the step of arranging for physical delivery of the postcard includes providing a stamp and an address of the recipient on the postcard, and supplying the postcard to a postal service, the postcard not being included in a mailing envelope.

7. The method of claim 5, wherein the step of electronically receiving includes electronically receiving electronic versions of a plurality of different photographs and electronically receiving identification of a plurality of recipients; the producing step includes producing, for each of the plurality of different photographs, a postcard having the respectively different photograph printed thereon; and the arranging step is carried out by arranging for physical delivery of each produced postcard to a respectively different one of the identified recipients.

8. The method of claims 4 and 5, further comprising adhering the physical medium to the postcard; and wherein the arranging step is carried out by arranging for physical delivery to the recipient via a postal service of the postcard with the physical medium adhered thereto, the postcard with the physical medium adhered thereto not being included in a mailing envelope.

9. The method of claim 5, further comprising the steps of taking by the sender a photograph using an electronic device to produce the electronic version of the photograph, and sending the electronic version of the photograph to the service company.

10. The method of claim 9, wherein the step of sending the electronic version of the photograph to the service company is carried out by the sender using the electronic device used to take the photograph.

11. The method of claim 5, wherein the electronically receiving step includes receiving a personalized message with the electronic version of the photograph; and the producing step includes providing the personalized message on the postcard.
